# EUROPEAN PATENT SPECIFICATION

(11) **EP 0 729 802 B1**
(45) Date of publication and mention of the grant of the patent: **19.04.2000**
(21) Application number: 96301327.1
(22) Date of filing: 27.02.1996
(51) Int. Cl.: B23B 51/00

(54) **Drill bit for drilling an undercut hole**
Bohrer zum Bohren unterschnittener Löcher
Foret pour le perçage de trous chambrés

(30) Priority: 28.02.1995 JP 4013195
(43) Date of publication of application: 04.09.1996
(73) Proprietor: KABUSHIKI KAISHA MIYANAGA, Miki, Hyogo 673-04 (JP)
(72) Inventor: Miyanaga, Masaaki, Ashiya-shi Hyogo 659 (JP)
(74) Representative: West, Alan Harry

(56) References cited:
- EP-A- 0 395 335
- DE-A- 2 148 654
- GB-A- 518 688
- GB-A- 2 157 207
- US-A- 1 536 208
- US-A- 4 402 642
- US-A- 4 462 726

## Description

The present invention relates to a drill bit for drilling an undercut hole in a solid object according to the preamble of the claims 1 and 3 and as known e.g. from EP-A-0 395 335. The drill bit is, in particular, adpated for drilling a hole to a predetermined depth in an object such as concrete and, at the same time, forming an undercut portion (flared portion) at the bottom of the hole.

To plant an anchor bolt in a drilled object such as concrete, it is known to drill a hole to a predetermined depth in the object, to insert a base portion of the anchor bolt into the drilled hole and to expand a split cylindrical body on the outer circumference of the anchor bolt, thereby to exert frictional resistance against the wall of the hole.

Because the strength of the anchor bolt against a pull-out force substantially depends on the bonding strength of the split cylindrical body with the wall near the bottom of the drilled hole, pull-out resistance can be greatly increased by forming the hole with an undercut portion of greater diameter.

For this reason, various drill bits have been proposed for drilling a hole to a predetermined depth in an object such as concrete using an ordinary drilling tool such as a hammer drill, and forming an undercut portion near the bottom of the drilled hole.

The drill bit for drilling an undercut hole of the prior art described above has the drawback that a hole and undercut are drilled in two processes, because, first a hole is drilled by using an ordinary drilling tool, and then the undercut portion is formed at the bottom of the hole by processing the drilled hole.

The present invention aims to solve the problems described above, by providing a drill bit for drilling an undercut hole which is capable of drilling a hole of a predetermined depth in an object and, at the same time, forming an undercut portion at the bottom of the hole, in a continuous operation.

In accordance with a first aspect of the invention, there is provided a drill bit for drilling an undercut hole in a solid object, comprising:
a body having a shank at one end and a drill bit at the other end coaxial with the shank;
a thrust transmitting member in the form of a cylindrical sleeve arranged for slidable axial movement around a lower portion of the body and having a contact portion at one end which comes into contact with the surface of the object to be drilled;
a lock pin projecting from the body into an elongated longitudinal slot in the cylindrical sleeve;
a longitudinal guide groove in the periphery of the drill bit having a sloped surface at the lower end thereof;
an undercut cutting member housed in the guide groove freely longitudinally movable and provided with an undercut cutting edge at the lower end thereof corresponding to the sloped surface;
a pull-up spring arranged between the contact portion of the cylindrical sleeve and a plate engaged to the upper end of the undercut cutting member; and
a working force transmitting mechanism intermediate of and coupled to the thrust transmitting member and the undercut cutting member, to force the undercut cutting member against the bias of the pull-up spring in response to movement of the body towards the thrust transmitting member thereby causing the undercut cutting edge to protrude outwardly of the drill bit surface,
characterised in that the working force transmitting mechanism includes:
a plurality of balls housed consecutively in an inverse U-shaped channel in the body to form a train of balls; and
a pair of connecting rods projecting downwardly of the body in contact with both ends of the train of balls, the lower end of one of the connecting rods contacting the contact portion of the cylindrical sleeve and the lower end of the other connecting rod contacting the plate engaged to the undercut cutting member.

Preferably, the drill bit comprises also an undercut marker having a marking edge projecting from the bottom face of the plate engaged with the undercut cutting member; and
a hole in the contact portion of the cylindrical sleeve aligned with the undercut marker to permit the marking edge to freely protrude from and retract into the hole.

In accordance with a second aspect of the invention, there is provided a drill bit for drilling an undercut hole in a solid object, comprising:
a body having a shank at one end and a drill bit at the other end coaxial with the shank;
a thrust transmitting member in the form of a cylindrical sleeve arranged for slidable axial movement around a lower portion of the body and having a contact portion at one end which comes into contact with the surface of the object to be drilled;
a longitudinal guide groove in the periphery of the drill bit having a sloped surface at the lower end thereof;
an undercut cutting member housed in the guide groove freely longitudinally movable and provided with an undercut cutting edge at the lower end thereof corresponding to the sloped surface;
a pull-up spring arranged between the contact portion of the cylindrical sleeve and a plate engaged to the upper end of the undercut cutting member; and
a working force transmitting mechanism intermediate of and coupled to the thrust transmitting member and the undercut cutting member, to force the undercut cutting member against the bias of the pull-up spring in response to movement of the body towards the thrust transmitting member thereby causing the undercut cutting edge to protrude outwardly of the drill bit surface,
characterised in that the working force transmitting mechanism includes:
a first working oil chamber formed by an oil case on the body, a cylinder on the body concentrically within the oil case and the upper end of the cylindrical sleeve slidably fitted between the oil case and the body;
a second working oil chamber formed by the cylinder and the body of the drill bit and a sleeve engaged with the undercut cutting member slidably fitted between the cylinder and the bit body; and
an oil passage through the cylinder between the second working oil chamber and the first working oil chamber.

The drill bit according to the present invention is to be contrasted with the drill bit described in EP-A-0395335. In that publication, there is described a drill bit having an extendable and retractable undercut portion for the drilling of undercut holes, for example to accommodate anchor bolts in concrete. The device includes a drill bit for drilling an initial hold to a predetermined depth at which stage a flange on a guide sleeve contacts the surface of the workpiece. Further downward movement of the drill bit which is securely attached to a lower shank of a body causes relative upward movement of the guide sleeve around the body. This in turn causes drive balls accommodated within the flared upper end of sleeve to move inwardly and force apart tapered surfaces on the body and a slide sleeve disposed between the shank and sleeve. The slide sleeve which carries dependent fingers within flutes along the length of the bit thus moves down relative to the bit, forcing the lower ends of the fingers over tapered lower ends of the flutes, exposing cutting edges on the ends of the fingers to grind an annular undercut groove in the hole.

Using the drill bit of the invention for drilling an undercut hole, a hole is drilled by the drill edge of the drill bit until the contact portion of the thrust transmitting member makes contact with the surface of the object to be drilled. When the contact portion of the thrust transmitting member makes contact with the surface of the object to be drilled and the downward movement of the thrust transmitting member stops, approaching movement of the body toward the thrust transmitting member presses the undercut cutting member downward against the resistance of the pull-up spring via the working force transmitting mechanism, thereby protruding the undercut cutting edge outwardly of the drill bit surface from the sloped surface of the guide groove and forming an undercut portion at the bottom of the drilled hole.

According to the first aspect of the invention, the desired undercut is formed while the contact portion makes contact with the surface of the object to be drilled and the body continues to move down relative to the cylindrical sleeve to the extent allowed by the elongated hole. During this process, the connecting rod making contact with the contact portion enters in the body to move the train of balls housed in the inverse U-shaped hole, so that the movement of the train of balls presses another connecting rod out of the body downward to press down the undercut cutting member, thereby forming the undercut portion by means of the undercut cutting edge.

Preferably, at the time forming of the undercut portion by means of the undercut cutting edge is completed, the plate moves down in the cylindrical sleeve so that the undercut marker passes through the communicating hole in the contact portion of the cylindrical sleeve and the marking edge protrudes below the contact portion to cut a circular line on the surface of the object to be drilled. It can be confirmed that the undercut portion has been cut, by observing this circular line.

According to the second aspect of the invention, the desired undercut is formed while, when the contact portion makes contact with the surface of the object to be drilled and the downward movement of the cylindrical sleeve stops, working oil in the first working oil chamber is pressed at the upper end of the cylindrical sleeve and moves through the oil passage hole to the second working oil chamber, so that the movement of the working oil to the second working oil chamber presses down the working force transmitting sleeve and the undercut cutting member, thereby forming the undercut portion by means of the undercut cutting edge.

The present invention will be described below in greater detail by way of example only with reference to the accompanying drawings, in which:
Figure 1 is a partially cut away side view of a drill bit according to a first embodiment of the invention;
Figure 2 is a sectional view of the drill bit of Fig. 1 in operation;
Figure 3 is a further sectional view of the drill bit of Fig. 1 in operation;
Figure 4 is a partially cut away front view of a drill bit according to a second embodiment of the invention, and
Figure 5 is a section view of the drill bit of Fig. 4 in operation.

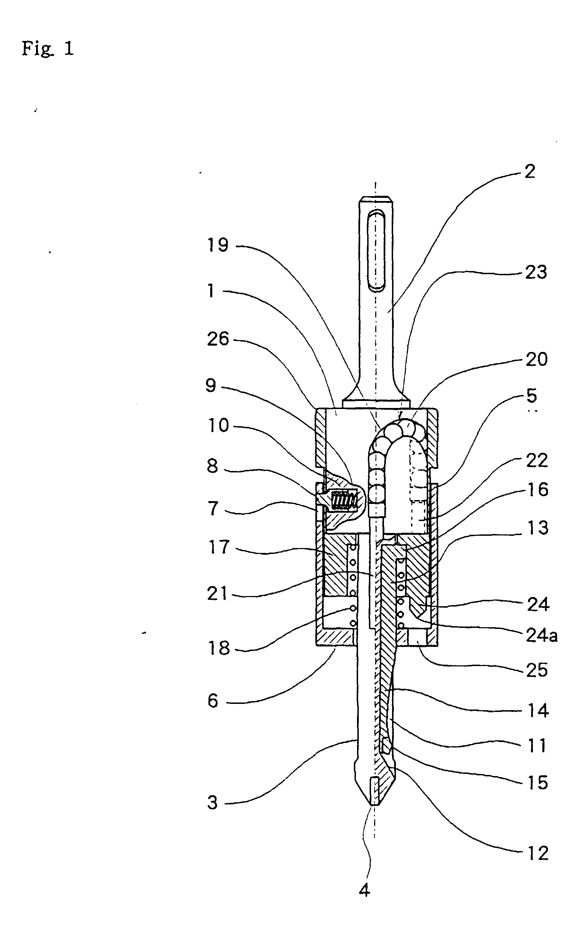

Referring first to Fig 1, numeral 1 denotes a body having a shank 2 which is to be connected to a drive spindle (not shown), provided at the center of the top face thereof and a drill bit 3 fixed at the center of the bottom face thereof. A drill edge 4 provided on the bottom of the drill bit 3 is the same as that of a known drilling tool for drilling an ordinary straight hole.

Numeral 5 denotes a cylindrical sleeve arranged freely movably in the vertical direction relative to the body portion 1, with a contact portion 6 which makes contact with the surface of an object to be drilled being formed at the lower end thereof. Lower part of the body 1 is slidably fitted in an upper opening of the cylindrical sleeve 5, a lock pin 8 provided to project on the body portion 1 is engaged in an elongated hole 7 made in the cylindrical sleeve 5 to regulate the range of vertical movement of the body 1 and the cylindrical sleeve 5. The lock pin 8 is held in a holding hole 9 made in the body portion 1 and made to project into the elongated hole 7 under the pressure of a spring 10, thereby enabling it to separate the body 1 and the cylindrical sleeve 5 under such a condition that the lock pin 8 is pressed into the holding hole 9 side against the resistance of the spring 10.

Numeral 11 denotes a guide groove made on the side face of the drill bit 3 by cutting therein in the axial direction, while the guide groove 11 has a sloped surface 12 formed at the bottom thereof to slope outwardly reaching the drill bit 3 surface.

Numeral 13 denotes an undercut cutting member housed in the guide groove 11 to be freely movable within a predetermined range relative to the drill bit 3, with the lower half of the undercut cutting member 13 being constituted of a blade 14 which has an Appropriate degree of elasticity with an undercut cutting edge 15 being provided at the lower end thereof corresponding to the sloped surface 12 of the guide groove 11, and a support portion 16 being provided at the upper end of the undercut cutting member 13 projecting outward.

Numeral 17 denotes a plate provided in the cylindrical sleeve 5 and engaged with the support portion 16 of the undercut cutting member 13, with a pull-up spring 18 being arranged between the plate 17 and the contact portion 6 of the cylindrical sleeve 5 so that, under the normal condition, the undercut cutting member 13 is pulled up together with the plate 17 relative to the drill bit 3 to retract the undercut cutting edge 15 into the guide groove 11 and the plate 17 is made contact with the bottom face of the body 1 under the pressure of the pull-up spring 18.

Numeral 19 denotes an inverse U-shaped hole made in the body 1 with a plurality of balls being housed consecutively in the inverse U-shaped hole 19 to form a train of balls 20, while connecting rods 21, 22 are provided to project downwardly of the body 1 to make contact with both ends of the train of balls 20, with the lower end of one connecting rod 21 being brought into contact with the contact portion 6 of the cylindrical sleeve 5, and the lower end of the other connecting rod 22 being brought into contact with the plate 17, thereby forming the working force transmitting mechanism 23.

Numeral 24 denotes an undercut marker provided on the.bottom face of the plate 17 near the periphery of the plate 17 to project downward, having a marking blade 24a at the lower end. A communicating hole 25 is provided in the contact portion 6 of the cylindrical sleeve 5 corresponding to the undercut marker 24 so that, when the plate 17 moves down in the cylindrical sleeve 5, the undercut marker 24 is passed through the communicating hole 25 thereby making the marking edge 24a projected below the contact portion 6.

Numeral 26 denotes a cover attached on the outer circumference of the body 1, for stabilizing the lock pin 8 and the train of balls 20 in the body 1.

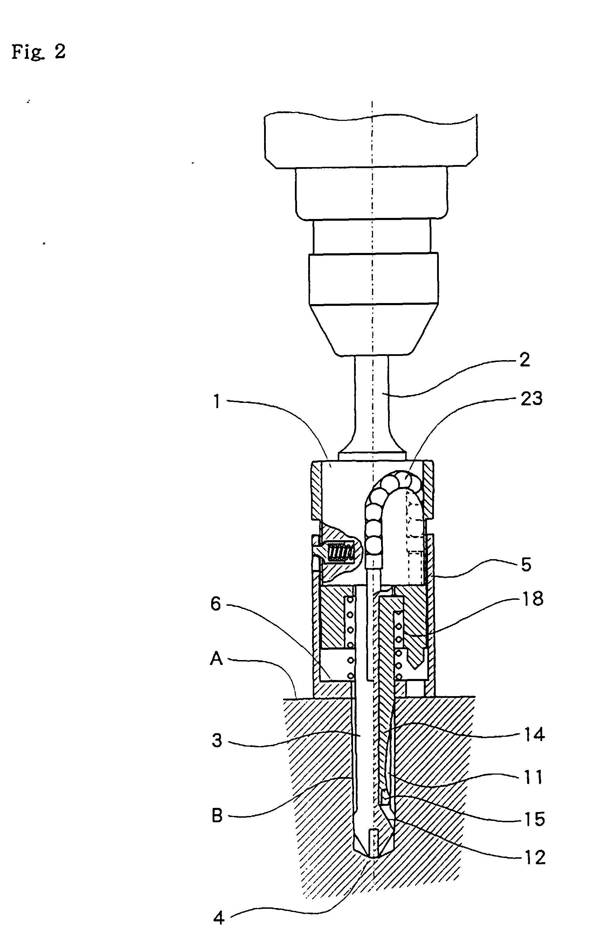

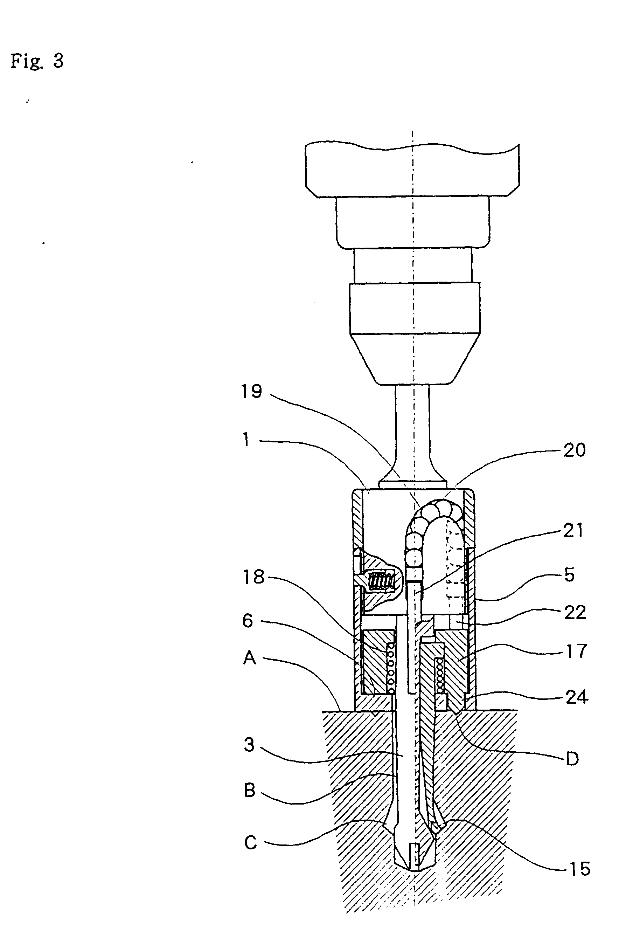

Operation of the drill bit configured as described above will be described below referring to Fig.2 and Fig.3.

Referring to Fig.2, the drill edge 4 of the drill bit 3 is pressed against the object A to be drilled to drill a drilled hole B. The drilled hole B reaches a predetermined depth and the contact portion 6 of the cylindrical sleeve 5 makes contact with the surface of the object to be drilled A.

Referring to Fig. 3 after the contact portion 6 of the cylindrical sleeve 5 has made contact with the surface of the object to be drilled A, the body 1 is thrust into the cylindrical sleeve 5 and continues to move down so that drilling of the drilled hole B continues.

Because the connecting rod 21 which is in contact with the contact portion 6 of the cylindrical sleeve 5 stops its downward movement along with the cylindrical sleeve 5, the connecting rod 21 is thrusted into the inverse U-shaped hole 19 made in the body 1 to move the train of balls 20, so that the movement of the train of balls 20 forces another connecting rod 22 out of the body 1 downward, thereby pressing down the plate 17.

Thus the plate 17 is pressed down together with the undercut cutting member 13 over a greater distance than the downward movement of the body 1 against the resistance of the pull-up spring 18, and the undercut cutting edge 15 moves along the sloped surface 12 of the guide groove 11 to protrude outwardly of the drill bit 3 surface and starts cutting of the drilled hole wall.

Eventually the plate 17 comes into contact with the contact portion 6 and the downward movement of the undercut cutting member 13 stops so that, at this time, the undercut cutting edge 15 reaches the point of maximum protrusion on the drill bit 3 surface, to complete cutting of the undercut portion C where the wall of the hole is tapered to enlarge the diameter downward. Also when cutting of the undercut portion C is completed, the marking edge 24 of the undercut marker 23 protrudes from the communicating hole 25 downwardly of the contact portion 6 and is pressed against the surface of the object to be drilled A, thereby marking a circular line D on the surface of the object to be drilled A. Completion of the undercut portion C cutting process can be confirmed by observing the circular line D.

When cutting of the undercut portion C is completed and the force to thrust the drill bit into the drilled hole is removed, the process proceeds in reversed order of the procedure described above; first the pull-up spring 18 pulls up the plate 17 and the undercut cutting member 13 and, at the same time, the cylindrical sleeve 5 returns to the initial position while the undercut cutting edge 15 retracts into the guide groove 11 and the drill edge 3 is pulled out of the drilled hole B to complete the drilling operation.

As described above, the circular line D marked on the surface of the object to be drilled A provides various information even after the drilling operation has been completed. For example, existence of the circular line D means that the hole is a drilled hole B with an undercut portion C being cut therein. When radius of the circular line D is given a relationship with the depth of the drilled hole B or the position of the undercut portion C, it provides convenience in selecting the type of anchor bolt to be planted and other purposes.

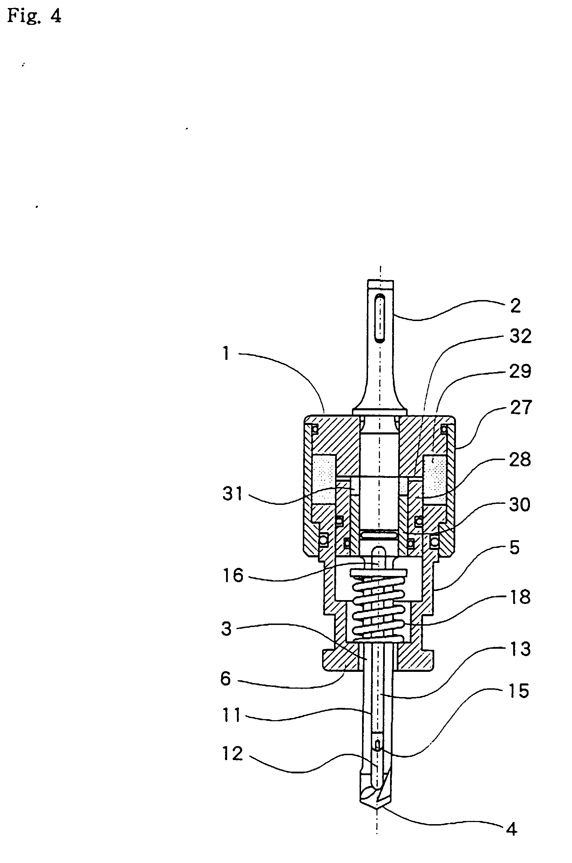

Referring now to Fig. 4, components identical with those shown in Fig.1 are given the same numerals and repetition of the same description will be avoided.

In the second embodiment, movement of the working oil is used to operate the working force transmitting mechanism.

And in the second embodiment, an oil case 27 is attached to the body 1 with a cylinder 28 being installed suspended on the body 1 concentrically in the oil case 27, the upper end of the cylindrical sleeve 5 being fitted slidably between the oil case 27 and the cylinder 28 to form the first working oil chamber 29 and a working force transmitting sleeve 30 being fitted slidably between a cylindrical portion 28 and the drill bit 3 to form a second working oil chamber 31, while an oil passage hole 32 is provided to penetrate through the upper part of the cylinder 28 so that the first working oil chamber 29 and the second working oil chamber 31 communicate with each other, and the lower end of the working force transmitting sleeve 30 is engaged with the support portion 16 of the undercut cutting member 13 thereby constituting a working force transmitting mechanism 23.

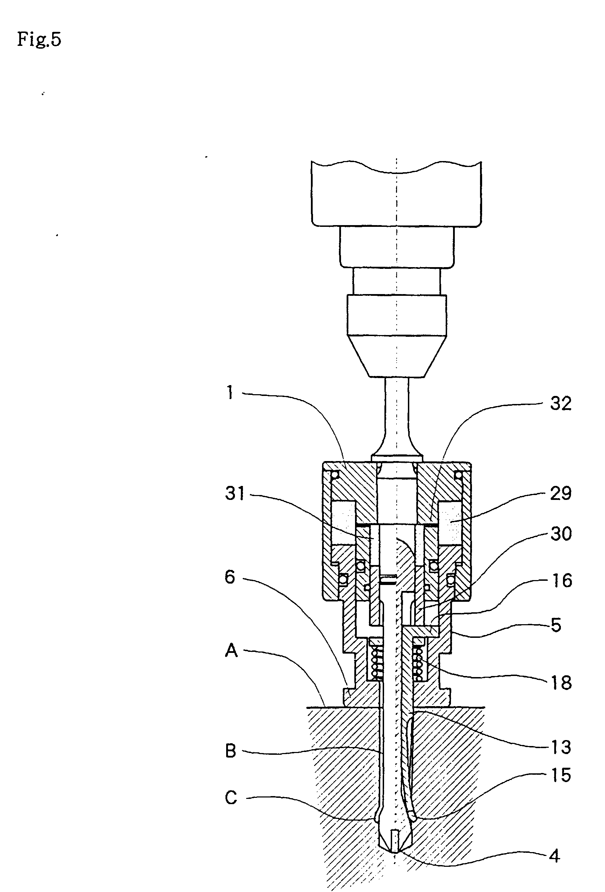

In a drilling operation, as shown in Fig.5, the drill edge 4 of the drill bit 3 is pressed against the object to be drilled A to drill the drilled hole B and, after the contact portion 6 of the cylindrical sleeve 5 makes contact with the surface of the object to be drilled A, the upper end of the cylindrical sleeve 5 is thrusted into the first working oil chamber 29 to move the working oil from the first working oil chamber 29 via the oil passage hole 32 into the second working oil chamber 31, thereby pressing down the working force transmitting sleeve 30.

Thus the working force transmitting sleeve 30 is pressed down together with the undercut cutting member 13 over a greater distance than the downward movement of the body 1 against the resistance of the pull-up spring 18, and the undercut cutting edge 15 moves along the sloped surface 12 of the guide groove 11 to protrude outwardly of the drill bit 3 surface and create the undercut portion C.

The invention configured as described above has such effects as follows.
(1) In a drilling operation, an undercut portion can be formed smoothly and surely because, after the thrust transmitting member has made contact with the surface of the object to be drilled, movement of forcing the body downward relative to the thrust transmitting member is converted to the press-down movement of the undercut portion cutting member to increase the distance of pressing down the undercut cutting member, thereby causing the undercut blade to protrude outwardly of the drill bit surface.
(2) An undercut hole can be drilled easily and efficiently in an operating procedure substantially the same as that of the conventional straight hole drilling operation, because drilling of a drilled hole of a predetermined depth as a primary hole for planting an anchor bolt and forming of an undercut portion at the bottom of the drilled hole can be carried out continuously in a single process.

Also because various information representing the configuration in the hole is obtained from the circular line marked on the surface of the object to be drilled, selective use of the anchor bolt to be planted can be done appropriately and anxiety about the pull-out resistant strength during the use of the anchor bolt can be eliminated.

## Claims

1. A drill bit for drilling an undercut hole in a solid object, comprising:
a body (1) having a shank (2) at one end and a drill bit (3) at the other end coaxial with the shank;
a thrust transmitting member in the form of a cylindrical sleeve (5) arranged for slidable axial movement around a lower portion of the body and having a contact portion (6) at one end which comes into contact with the surface of the object to be drilled;
a lock pin (8) projecting from the body into an elongated longitudinal slot (7) in the cylindrical sleeve;
a longitudinal guide groove (11) in the periphery of the drill bit (3) having a sloped surface (12) at the lower end thereof;
an undercut cutting member (13) housed in the guide groove freely longitudinally movable and provided with an undercut cutting edge (15) at the lower end thereof corresponding to the sloped surface (12) ;
a pull-up spring (18) arranged between the contact portion (6) of the cylindrical sleeve and a plate (17) engaged to the upper end of the undercut cutting member (13); and
a working force transmitting mechanism (23,33) intermediate of and coupled to the thrust transmitting member (5) and the undercut cutting member (13), to force the undercut cutting member against the bias of the pull-up spring in response to movement of the body towards the thrust transmitting member thereby causing the undercut cutting edge to protrude outwardly of the drill bit surface,
characterised in that the working force transmitting mechanism includes:
a plurality of balls housed consecutively in an inverse U-shaped channel (19) in the body to form a train of balls (20); and
a pair of connecting rods (21,22) projecting downwardly of the body in contact with both ends of the train of balls, the lower end of one of the connecting rods (21) contacting the contact portion of the cylindrical sleeve and the lower end of the other connecting rod (22) contacting the plate engaged to the undercut cutting member.

2. A drill bit according to claim 1, comprising also
an undercut marker (24) having a marking edge (24a) projecting from the bottom face of the plate (17) engaged with the undercut cutting member (13) ; and
a hole (25) in the contact portion (6) of the cylindrical sleeve aligned with the undercut marker to permit the marking edge (24a) to freely protrude from and retract into the hole.

3. A drill bit for drilling an undercut hole in a solid object, comprising:
a body (1) having a shank (2) at one end and a drill bit (3) at the other end coaxial with the shank;
a thrust transmitting member in the form of a cylindrical sleeve (5) arranged for slidable axial movement around a lower portion of the body and having a contact portion (6) at one end which comes into contact with the surface of the object to be drilled;
a longitudinal guide groove (11) in the periphery of the drill bit (3) having a sloped surface (12) at the lower end thereof;
an undercut cutting member (13) housed in the guide groove freely longitudinally movable and provided with an undercut cutting edge (15) at the lower end thereof corresponding to the sloped surface (12) ;
a pull-up spring (18) arranged between the contact portion (6) of the cylindrical sleeve and a plate (17) engaged to the upper end of the undercut cutting member (13); and
a working force transmitting mechanism (23,33) intermediate of and coupled to the thrust transmitting member (5) and the undercut cutting member (13), to force the undercut cutting member against the bias of the pull-up spring in response to movement of the body towards the thrust transmitting member thereby causing the undercut cutting edge to protrude outwardly of the drill bit surface,
characterized in that the working force transmitting mechanism includes:
a first working oil chamber (29) formed by an oil case (27) on the body, a cylinder (28) on the body concentrically within the oil case and the upper end of the cylindrical sleeve (5) slidably fitted between the oil case and the body;
a second working oil chamber (31) formed by the cylinder (28) and the body of the drill bit (3) and a sleeve (30) engaged with the undercut cutting member (13) slidably fitted between the cylinder and the bit body; and
an oil passage (32) through the cylinder (28) between the second working oil chamber (31) and the first working oil chamber (29).

## Patentansprüche

1. Bohrer zum Bohren eines unterschnittenen Lochs in einem massiven Gegenstand, mit:
einem Körper (1), der an einem Ende einen Schaft (2) und an dem zum Schaft koaxialen anderen Ende einen Bohrer (3) aufweist;
einem Schubübertragungselement in Form einer zylindrischen Hülse (5), die so angeordnet ist, daß sie um einen unteren Abschnitt des Körpers eine axiale Gleitbewegung ausführen kann, und an einem Ende einen Kontaktabschnitt (6) besitzt, der mit der Oberfläche des zu bohrenden Gegenstandes in Kontakt gelangt;
einem Verriegelungsstift (8), der vom Körper in einen länglichen, longitudinalen Schlitz (7) in der zylindrischen Hülse vorsteht;
einer longitudinalen Führungsnut (11) in der Umfangsfläche des Bohrers (3), die an ihrem unteren Ende eine schräge Oberfläche (12) besitzt;
einem Unterschnitt-Schneidelement (13), das in der Führungsnut longitudinal frei beweglich untergebracht ist und an seinem der schrägen Oberfläche (12) entsprechenden unteren Ende mit einer Unterschnitt-Schneidkante (15) versehen ist;
einer Hochziehfeder (18), die zwischen dem Kontaktabschnitt (6) der zylindrischen Hülse und einer mit dem oberen Ende des Unterschnitt-Schneidelements (13) in Eingriff befindlichen Platte (17) angeordnet ist; und
einem Arbeitskraft-Übertragungsmechanismus (23, 33), der zwischen dem Schubübertragungselement (5) und dem Unterschnitt-Schneidelement (13) angeordnet und mit diesen gekoppelt ist, um das Unterschnitt-Schneidelement entgegen der Vorbelastung der Hochziehfeder als Antwort auf die Bewegung des Körpers gegen das Schubübertragungselement zu zwingen, damit die Unterschnitt-Schneidkante von der Bohreroberfläche nach außen vorsteht, dadurch gekennzeichnet, daß der Arbeitskraft-Übertragungsmechanismus enthält:
mehrere Kugeln, die hintereinander in einem Kanal (19) in Form eines umgedrehten U im Körper untergebracht sind und einen Kugelzug (20) bilden; Verbindungsstäbe (21, 22), die vom Körper nach unten vorstehen und mit beiden Enden des Kugelzugs in Kontakt sind, wobei das untere Ende einer der Verbindungsstäbe (21) mit dem Kontaktabschnitt der zylindrischen Hülse in Kontakt ist und das untere Ende des anderen Verbindungsstabs (22) mit der mit dem Unterschnitt-Schneidelement in Eingriff befindlichen Platte in Kontakt ist.

2. Bohrer nach Anspruch 1, ferner mit
einer Unterschnitt-Markierungseinrichtung (24) mit einer Markierungskante (24a), die von der unteren Fläche der Platte (17), die mit dem Unterschnitt-Schneidelement (13) in Eingriff ist, vorsteht; und
einem Loch (25) im Kontaktabschnitt (6) der zylindrischen Hülse, das auf die Unterschnitt-Markierungseinrichtung ausgerichtet ist, damit die Markierungskante (24a) frei in das Loch vorstehen und aus diesem zurückgezogen werden kann.

3. Bohrer zum Bohren eines unterschnittenen Lochs in einem massiven Gegenstand, mit:
einem Körper (1), der an einem Ende einen Schaft (2) und an dem zum Schaft koaxialen anderen Ende einen Bohrer (3) aufweist;
einem Schubübertragungselement in Form einer zylindrischen Hülse (5), die so angeordnet ist, daß sie um einen unteren Abschnitt des Körpers eine axiale Gleitbewegung ausführen kann, und an einem Ende einen Kontaktabschnitt (6) besitzt, der mit der Oberfläche des zu bohrenden Gegenstandes in Kontakt gelangt;
einer longitudinalen Führungsnut (11) in der Umfangsfläche des Bohrers (3), die an ihrem unteren Ende eine schräge Oberfläche (12) besitzt;
einem Unterschnitt-Schneidelement (13), das in der Führungsnut longitudinal frei beweglich untergebracht ist und an seinem der schrägen Oberfläche (12) entsprechenden unteren Ende mit einer Unterschnitt-Schneidkante (15) versehen ist;
einer Hochziehfeder (18), die zwischen dem Kontaktabschnitt (6) der zylindrischen Hülse und einer mit dem oberen Ende des Unterschnitt-Schneidelements (13) in Eingriff befindlichen Platte (17) angeordnet ist; und
einem Arbeitskraft-Übertragungsmechanismus (23, 33), der sich zwischen dem Schubübertragungselement (5) und dem Unterschnitt-Schneidelement (13) befindet und mit diesen gekoppelt ist, um das Unterschnitt-Schneidelement entgegen der Vorbelastung der Hochziehfeder als Antwort auf die Bewegung des Körpers gegen das Schubübertragungselement zu zwingen, damit die Unterschnitt-Schneidkante von der Bohreroberfläche nach außen vorsteht, dadurch gekennzeichnet, daß der Arbeitskraftübertragungsmechanismus enthält:
eine erste Arbeitsölkammer (29), die durch ein Ölgehäuse (27) am Körper, einen Zylinder (28) am Körper, der konzentrisch im Ölgehäuse angeordnet ist, und ein oberes Ende der zylindrischen Hülse (5), die zwischen das Ölgehäuse und den Körper gleitend eingepaßt ist, gebildet ist;
eine zweite Arbeitsölkammer (31), die durch den Zylinder (28) und den Körper des Bohrers (3) sowie durch eine Hülse (30), die mit dem zwischen den Zylinder und den Bohrkörper gleitend eingepaßten Unterschnitt-Schneidelement (13) in Eingriff ist, gebildet ist; und
einen Öldurchlaß (32) durch den Zylinder (28) zwischen der zweiten Arbeitsölkammer (31) und der ersten Arbeitsölkammer (29).

## Revendications

1. Outil de perçage pour percer un trou en contre-dépouille dans un objet plein, comprenant :
un corps (1) comportant, au niveau de l'une de ses extrémités, une tige (2) et, au niveau de son autre extrémité, un foret (3) coaxial avec la tige ;
un organe de transmission de poussée sous la forme d'un manchon cylindrique (5) disposé pour effectuer un mouvement axial coulissant autour d'une partie inférieure du corps et comportant, au niveau de l'une de ses extrémités, une partie de contact (6) qui vient en contact avec la surface de l'objet à percer ;
une goupille de blocage (8) qui s'avance depuis le corps dans une fente longitudinale allongée (7) formée dans le manchon cylindrique ;
une rainure de guidage longitudinale (11) formée dans la périphérie du trépan (3) et comportant une surface inclinée (12) au niveau de son extrémité inférieure ;
un organe de coupe en contre-dépouille (13) logé dans la rainure de guidage pour pouvoir se déplacer librement longitudinalement et muni d'une arête de coupe en contre-dépouille (15) au niveau de son extrémité inférieure correspondant à la surface inclinée (12) ;
un ressort de rappel (18) disposé entre la partie de contact (6) du manchon cylindrique et une plaque (17) en prise avec l'extrémité supérieure de l'organe de coupe en contre-dépouille (13) ; et
un mécanisme de transmission de force de travail (23, 33) situé entre l'organe de transmission de poussée (5) et l'organe de coupe en contre-dépouille (13) et accouplé avec ceux-ci pour pousser l'organe de coupe en contre-dépouille à l'encontre de la sollicitation du ressort de rappel en réponse au déplacement du corps en direction de l'organe de transmission de poussée, afin d'amener ainsi l'arête de coupe en contre-dépouille à dépasser à l'extérieur de la surface du trépan,
caractérisé en ce que le mécanisme de transmission de force de travail comprend :
plusieurs billes logées les unes à la suite des autres dans une gorge en forme de U inversé (19) ménagée dans le corps, pour former un train de billes (20) ; et
deux tiges de liaison (21, 22) qui font saillie en bas du corps et sont en contact avec les deux extrémités du train de billes, l'extrémité inférieure de l'une (21) des tiges de liaison étant en contact avec la partie de contact du manchon cylindrique, tandis que l'extrémité inférieure de l'autre tige de liaison (22) est en contact avec la plaque en prise avec l'organe de coupe en contre-dépouille.

2. Outil de perçage selon la revendication 1, comprenant également
un marqueur de contre-dépouille (24) comportant une arête de marquage (24a) qui fait saillie depuis la face inférieure de la plaque (17) en prise avec l'organe de coupe en contre-dépouille (13) ; et
un trou (25) formé dans la partie de contact (6) du manchon cylindrique en alignement avec le marqueur de contre-dépouille pour que l'arête de marquage (24a) puisse librement sortir du trou ou rentrer dans celui-ci.

3. Outil de perçage pour percer un trou en contre-dépouille dans un objet plein, comprenant :
un corps (1) comportant, au niveau de l'une de ses extrémités, une tige (2) et, au niveau de son autre extrémité, un foret (3) coaxial avec la tige ;
un organe de transmission de poussée sous la forme d'un manchon cylindrique (5) disposé pour effectuer un mouvement axial coulissant autour d'une partie inférieure du corps et comportant, au niveau de l'une de ses extrémités, une partie de contact (6) qui vient en contact avec la surface de l'objet à percer ;
une rainure de guidage longitudinale (11) formée dans la périphérie du trépan (3) et comportant une surface inclinée (12) au niveau de son extrémité inférieure ;
un organe de coupe en contre-dépouille (13) logé dans la rainure de guidage pour pouvoir se déplacer librement longitudinalement et muni d'une arête de coupe en contre-dépouille (15) au niveau de son extrémité inférieure correspondant à la surface inclinée (12) ;
un ressort de rappel (18) disposé entre la partie de contact (6) du manchon cylindrique et une plaque (17) en prise avec l'extrémité supérieure de l'organe de coupe en contre-dépouille (13) ; et
un mécanisme de transmission de force de travail (23, 33) situé entre l'organe de transmission de poussée (5) et l'organe de coupe en contre-dépouille (13) et accouplé avec ceux-ci pour pousser l'organe de coupe en contre-dépouille à l'encontre de la sollicitation du ressort de rappel en réponse au déplacement du corps en direction de l'organe de transmission de poussée, afin d'amener ainsi l'arête de coupe en contre-dépouille à dépasser à l'extérieur de la surface du trépan,
caractérisé en ce que le mécanisme de transmission de force de travail comprend :
une première chambre à huile de travail (29) formée par un carter à huile (27) disposé sur le corps, un cylindre (28) disposé sur le corps de manière concentrique à l'intérieur du carter à huile et l'extrémité supérieure du manchon cylindrique (5) insérée de manière coulissante entre le carter à huile et le corps ;
une seconde chambre à huile de travail (31) formée par le cylindre (28) et le corps du foret (3) et un manchon (30) en prise avec l'organe de coupe en contre-dépouille (13) et inséré de manière coulissante entre le cylindre et le corps du foret ; et
un passage d'huile (32) ménagé à travers le cylindre (28) entre la seconde chambre à huile de travail (31) et la première chambre à huile de travail (29).
